# FASCICULE DE BREVET EUROPEEN

(11) **EP 4 065 525 B1**
(45) Date de publication et mention de la délivrance du brevet: **10.06.2026**
(21) Numéro de dépôt: 20811336.5
(22) Date de dépôt: 25.11.2020
(51) Int. Cl.: C03B 5/42, F27D 1/04

(54) **BLOC D'ANGLE POUR FOUR VERRIER**
ECKBLOCK FÜR GLASSCHMELZOFEN
CORNER BLOCK FOR GLASS FURNACE

(30) Priorité: 25.11.2019 FR 1913149
(43) Date de publication de la demande: 05.10.2022
(73) Titulaire: SAINT-GOBAIN CENTRE DE RECHERCHES ET D'ETUDES EUROPEEN, 92400 Courbevoie (FR)
(72) Inventeur: CABODI, Isabelle, 84300 CAVAILLON (FR); VESPA, Pierrick, 13100 AIX-EN-PROVENCE (FR)
(74) Mandataire: Ipsilon
(86) Numéro de dépôt international: PCT/EP2020/083416
(87) Numéro de publication internationale: WO 2021/105238

(56) Documents cités:
- DE-C- 717 505
- FR-A1- 3 079 829
- US-A- 1 619 270
- US-A- 2 222 816

## Description

### Domaine technique

L'invention concerne un bloc d'angle pour un four verrier, et un four verrier comportant un tel bloc d'angle.

### Etat de la technique

De nombreux produits verriers sont fabriqués par la fusion et l'affinage d'un mélange vitrifiable de matières premières comprenant des composés tels que des oxydes, des carbonates, des sulfates et des nitrates. Ces deux étapes sont réalisées dans des fours dont les principaux éléments constitutifs sont des produits réfractaires pouvant résister aux hautes températures ainsi qu'aux contraintes rencontrées dans ces fours. Les fours verriers comprennent ainsi généralement un très grand nombre de produits réfractaires, disposés à différents endroits selon leurs propriétés. Pour chaque partie du four, le produit choisi est celui ne provoquant pas de défauts rendant le verre inutilisable (ce qui réduirait les rendements de production) et résistant suffisamment longtemps pour apporter au four une durée de vie satisfaisante.

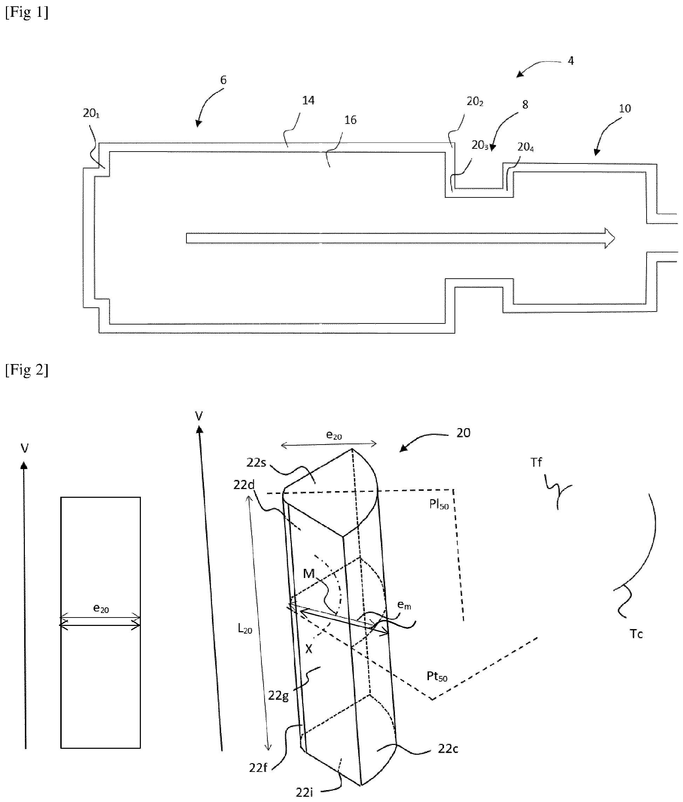

Un four verrier, en particulier un four float, comporte un bassin 4 allongé, surmontée d'une voûte (figure 1). On distingue, de l'amont vers l'aval, une zone de fusion et d'affinage à haute température 6, une partie à section étranglée, appelée « corset » 8 dans un four float, puis une zone de conditionnement à plus basse température 10.

Un mélange vitrifiable de matières premières est introduit dans la zone de fusion et d'affinage, en amont. Ce mélange est transformé en une matière en fusion au moyen de dispositifs de chauffage tels que des brûleurs (non représentés), disposés dans les parois latérales du bassin et fonctionnant en alternance. Le bain de verre en fusion transite ensuite, à travers le corset, dans la zone de conditionnement, où il est amené à une température appropriée pour pouvoir être prélevé par tirée, en vue d'opérations ultérieures de façonnage, par exemple de formage, d'étirage ou de flottage.

Le bassin 4 comporte une paroi latérale 14 verticale et une sole 16 horizontale. La paroi latérale 14 est classiquement constituée de plusieurs pans en des blocs latéraux, reliés entre eux par des blocs d'angle 20.

On appelle "bloc d'angle" la partie de la paroi latérale 14 qui relie entre eux deux pans sensiblement plats de la paroi latérale du bassin.

On distingue les blocs d'angle d'enfournement 20₁, les blocs d'angle de fin de fusion 20₂, et les blocs d'angle d'entrée 20₃ et de sortie 20₄ du corset.

Les blocs d'angle sont fortement sollicités et connaissent parfois une fissuration marquée, à la fois verticalement et horizontalement. Une fois fissuré, un bloc d'angle est soumis à une corrosion accrue en raison du verre en fusion qui peut s'infiltrer dans les fissures. Cette corrosion accélérée conduit à une usure prématurée qui peut entraîner des fuites majeures de verre, et finalement l'arrêt d'un four.

Le bloc d'angle doit également supporter des contraintes thermiques fortes puisqu'une partie du bloc est dans un environnement à des températures proches de la température ambiante, généralement grâce à un refroidissement par soufflage d'air, alors que la partie à l'intérieur du four, est à des températures d'environ 1500°C.

Par ailleurs, le bloc d'angle subit des cycles thermiques dus à des opérations de maintenance, telles que des opérations appelées « placage », qui nécessitent un arrêt puis une reprise du refroidissement externe du four, ou encore dus au chargement du mélange vitrifiable.

Le bloc d'angle doit également résister à la corrosion par les vapeurs agressives du four et par les condensats. Les blocs d'angle d'enfournement doivent en outre résister à l'érosion due au passage des matières premières.

Pour résister à ces contraintes, le bloc d'angle est constitué en un produit réfractaire.

Parmi les produits réfractaires, on distingue les produits fondus et les produits frittés. A la différence des produits frittés, les produits fondus comportent le plus souvent une phase vitreuse intergranulaire reliant des grains cristallisés. Les problèmes posés par les produits frittés et par les produits fondus, et les solutions techniques adoptées pour les résoudre, sont donc généralement différents. Une composition mise au point pour fabriquer un produit fritté n'est donc pas *a priori* utilisable telle quelle pour fabriquer un produit fondu, et réciproquement. Les produits fondus, souvent appelés « électrofondus », sont obtenus par fusion d'un mélange de matières premières appropriées dans un four à arc électrique ou par toute autre technique adaptée à ces produits. Le bain de matière en fusion est ensuite coulé dans un moule, puis le produit obtenu subit un cycle de refroidissement contrôlé.

Actuellement, on utilise principalement des produits fondus pour constituer les blocs d'angle, en particulier des produits de type Alumine-Zircone-Silice (AZS en abrégé) contenant de 30 à 45% de zircone. La microstructure de ces produits est sensiblement constituée de cristaux d'alumine-alpha, de cristaux de zircone libre, de cristaux d'eutectique corindon-zircone et d'une phase vitreuse intercristalline.

Par ailleurs, pour augmenter la durée de vie du four, l'assemblage des blocs réfractaires du four doit être « à sec », c'est-à-dire sans ciment de jointoiement. Pour que l'étanchéité soit assurée, les blocs doivent donc présenter des dimensions très précises, avec un bon état de surface. Les blocs, et en particulier les blocs d'angle, sont donc toujours usinés pour assurer un contact étroit avec les blocs adjacents. Un four verrier avec des blocs de paroi et des blocs d'angle ayant une surface intérieure concave est décrit dans le brevet DE717505C.

Cependant, la résistance à la fissuration des blocs d'angle est parfois insuffisante pour répondre aux évolutions actuelles des besoins des verriers, qui demandent un allongement de la durée de vie des fours.

Il existe donc un besoin pour un bloc d'angle présentant une meilleure résistance à la fissuration et/ou une durée de vie accrue. Un but de l'invention est de répondre à ce besoin.

### Résumé de l'invention

L'invention concerne un bloc d'angle pour bassin de four verrier selon la revendication 1.

Comme on le verra plus en détail dans la suite de la description, les inventeurs ont découvert que l'absence d'arête permet de réduite la fissuration et d'augmenter la durée de vie du bloc d'angle. Un bloc d'angle selon l'invention peut encore comporter une ou plusieurs des caractéristiques optionnelles suivantes :
- le tronçon principal s'étend depuis la surface supérieure jusqu'à une partie de base destinée à être intégrée dans une sole du bassin dans la position de service, voire s'étend depuis la surface supérieure jusqu'à la surface inférieure du bloc d'angle ;
- dans le tronçon principal, la face chaude est dépourvue d'arête marquant une rupture de pente supérieure à 10° ;
- dans le plan de coupe longitudinal médian, le bloc d'angle présente, dans le tronçon principal, une épaisseur décroissante depuis le plan transversal limite inférieur jusqu'au plan transversal limite supérieur, ou présente une épaisseur constante ;
- dans le tronçon principal, un point du profil de la face chaude dans le plan de coupe longitudinal médian est d'autant plus écarté d'une droite verticale passant par l'extrémité supérieure dudit profil que ledit point est proche de la surface inférieure ;
- le profil de la face chaude dans un plan de coupe longitudinal médian est rectiligne et, de préférence, forme dans la position de service, avec la direction verticale, un angle α inférieur à 30° et supérieur à 2° ;
- l'angle α est inférieur à 20°, de préférence inférieure à 10%, voire inférieure à 5% et/ou supérieur à 3° ;
- la face chaude est strictement convexe dans le tronçon principal ;
- dans un plan de coupe transversal quelconque dans le tronçon principal, la face chaude présente un profil convexe en forme d'arc de cercle, optionnellement prolongé, à une ou à chacune de ses extrémités, par un segment de droite ;
- la face chaude présente, dans un plan de coupe transversal, un profil dont la forme générale est identique quel que soit le plan de coupe transversal considéré dans le tronçon principal ;
- la face chaude présente, dans un plan de coupe transversal du tronçon principal, un profil qui est d'autant plus long que ledit plan de coupe transversal est proche du plan transversal limite inférieur ;
- le bloc d'angle présente la forme générale d'un quart de tronc de cylindre de base circulaire, ou d'un quart de tronc de cône, ou d'un quart de tronc de cylindre de base annulaire ;
- dans le tronçon principal, la face froide est dépourvue d'arête.

**Selon un deuxième aspect principal, optionnel,** de l'invention, au moins une partie de la face froide est isolée thermiquement.

Un bloc d'angle selon le deuxième aspect principal de l'invention peut encore comporter une ou plusieurs des caractéristiques optionnelles suivantes :
- un premier matériau isolant thermiquement est disposé, de préférence collé, sur au moins une partie de la face froide, de préférence de manière à couvrir au moins une partie de la face froide qui, dans la position de service, s'étend, depuis la surface supérieure du bloc d'angle, jusqu'à la zone de flottaison, de préférence de manière à couvrir au moins toute la partie de la face froide qui, dans la position de service, s'étend, depuis la surface supérieure du bloc d'angle, jusqu'à la zone de flottaison ;
- de préférence, la partie de la face froide couverte par le premier matériau isolant thermiquement s'étend, de préférence depuis la surface supérieure du bloc d'angle, jusqu'à plus de 300 mm, de préférence plus de 400 mm, de préférence plus de 500 mm, et/ou moins de 800 mm, de préférence moins de 600 mm de la surface supérieure ;
- de préférence, le premier matériau isolant thermiquement présente la forme d'une dalle ;
- de préférence, le premier matériau isolant thermiquement présente une conductivité thermique inférieure à 1,0 W.m⁻¹.K⁻¹, voire inférieure à 0,7 W.m⁻¹.K⁻¹, voire inférieure à 0,5 W.m⁻¹.K⁻¹ ;
- selon une autre variante, le premier matériau isolant thermiquement est constitué en un matériau réfractaire présentant une conductivité thermique inférieure à 7,0 W.m⁻¹.K⁻¹ ;
- de préférence, l'épaisseur de premier matériau isolant thermiquement, de préférence sous la forme d'une dalle, est inférieure ou égale à 100 mm, voire inférieure ou égale à 50 mm, voire inférieure ou égale à 30 mm, voire inférieure ou égale à 20 mm, voire inférieure ou égale à 10 mm, voire inférieure à 5 mm et/ou supérieure à 1 mm ;
- un deuxième matériau isolant thermiquement est disposé, de préférence collé, sur au moins une partie de la face froide, de préférence de manière à couvrir au moins une partie de la face froide qui, dans la position de service, s'étend sous la zone de flottaison, de préférence de manière à couvrir au moins toute la partie de la face froide qui, dans la position de service, s'étend sous la zone de flottaison ;
- de préférence, la partie de la face froide couverte par le deuxième matériau isolant thermiquement s'étend, de préférence depuis la surface inférieure du bloc d'angle, jusqu'à plus de 500 mm, de préférence plus de 600 mm, de préférence plus de 700 mm, et/ou moins de 800 mm de la surface inférieure ;
- de préférence, le deuxième matériau isolant thermiquement présente la forme d'une dalle ;
- de préférence, le deuxième matériau isolant thermiquement présente une conductivité thermique inférieure à 8 W.m⁻¹.K⁻¹, voire inférieure à 6 W.m⁻¹.K⁻¹, voire inférieure à 1 W.m⁻¹.K⁻¹ ;
- le deuxième matériau isolant est un matériau de type AZS comportant plus de 80% de ZrO₂ en pourcentage massique, et de préférence dans lequel, en pourcentages massiques sur la base des oxydes, la teneur totale Al₂O₃ + ZrO₂ + SiO₂ représente plus de 80,0%, de préférence plus de 84,0%, de préférence plus de 86,0%, et/ou moins de 97,0%, voire moins de 95,0%, voire moins de 94,0% ;
- de préférence, l'épaisseur de deuxième matériau isolant thermiquement, de préférence sous la forme d'une dalle, est inférieure ou égale à 200 mm, voire inférieure ou égale à 100 mm, voire inférieure ou égale à 50 mm, voire inférieure ou égale à 30 mm, voire inférieure ou égale à 20 mm, voire inférieure ou égale à 10 mm, voire inférieure à 5 mm et/ou supérieure à 1 mm ;
- de préférence, l'épaisseur et/ou la conductivité thermique de la couche de deuxième matériau isolant thermiquement sont telles que l'isolation thermique est supérieure à celle assurée par la couche du premier matériau isolant thermiquement ;
- toute la face froide est couverte par un matériau isolant thermiquement, la partie supérieure de la face froide étant plus isolée thermiquement, de préférence avec un dit premier matériau isolant thermiquement, que la partie inférieure de la face froide, de préférence isolée avec un dit deuxième matériau isolant thermiquement, la limite entre les zones couvertes par du premier matériau isolant thermiquement et par du deuxième matériau isolant thermiquement étant de préférence dans une bande de moins de 20 cm, de préférence de moins de 10 cm de hauteur dans la zone de flottaison.

Un bloc d'angle selon l'invention peut encore comporter une ou plusieurs des caractéristiques optionnelles suivantes :
- le bloc d'angle présente une composition chimique, en pourcentage massique sur la base des oxydes, telle que :

   Al₂O₃ + ZrO₂ + SiO₂ > 80,0% ;
- le bloc d'angle présente une composition chimique comportant, en pourcentage massique sur la base des oxydes, plus de 0,5% et moins de 10,0% d'un stabilisant de la zircone ;
- le bloc d'angle présente une composition chimique, en pourcentages massiques sur la base des oxydes, telle que, pour un total de 100% :
   - Al₂O₃ + ZrO₂ + SiO₂ : plus de 84,0% et moins de 99,7%,
   - Y₂O₃ : moins de 5,0%,
   - Na₂O + K₂O : moins de 1,5%,
   - B₂O₃ : moins de 0,6%,
   - espèces oxydes autres que Al₂O₃, ZrO₂, SiO₂, Y₂O₃, Na₂O, K₂O et B₂O₃ : moins de 10,0% ;
- les espèces oxydes autres que Al₂O₃, ZrO₂, SiO₂, Y₂O₃, Na₂O, K₂O et B₂O₃ sont CaO, MgO, SrO, BaO, TiO₂, Fe₂O₃, et SnO₂, une ou plusieurs de ces espèces pouvant être absente(s) ;
- le bloc d'angle présente une composition chimique, en pourcentages massiques sur la base des oxydes, telle que:
   - ZrO₂ : plus de 12,0% et moins de 45,0%,
   - SiO₂ : plus de 8,0% et moins de 24,0%,
   - Al₂O₃ : plus de 35,0% et moins de 60,0%.

Un procédé de fabrication comprend les étapes successives suivantes :
a) mélange de matières premières de manière à former une charge de départ ;
b) fusion de ladite charge de départ jusqu'à obtention d'un bain de matière en fusion ;
c) coulage de ladite matière en fusion dans un moule, de préférence à température ambiante, et solidification de ladite matière en fusion par refroidissement, de manière à obtenir une pièce intermédiaire présentant la forme générale d'un bloc d'angle ;
d) démoulage de la pièce intermédiaire, puis
e) de préférence usinage, de préférence partiel, de la surface extérieure de la pièce intermédiaire, de manière à obtenir un bloc d'angle selon l'invention ou un morceau d'un bloc d'angle selon l'invention.

De préférence, le moule est réalisé par impression 3D, de manière à obtenir un bloc présentant la forme souhaitée.

L'invention concerne encore un dispositif d'angle comportant un bloc d'angle selon l'invention et un bloc d'adaptation présentant une première face en contact avec la surface gauche ou la surface droite du bloc d'angle, et une deuxième face, parallèle et opposée à la première face, et présentant une forme différente de ladite première face.

La forme de la surface gauche ou de la surface droite est de préférence celle de la surface d'un bloc adjacent avec laquelle ladite surface gauche ou ladite surface droite est en contact dans la position de service.

Un procédé de fabrication d'un four comportant un bloc d'angle selon l'invention est décrit.

L'invention concerne enfin un four verrier comportant un bassin comportant une paroi latérale comportant deux pans et un bloc d'angle selon l'invention, ou un dispositif d'angle selon l'invention, reliant lesdits deux pans.

De préférence, le bloc d'angle ou le dispositif d'angle est disposé en entrée de corset ou à l'enfournement. De préférence le bloc d'angle est un le bloc d'angle d'enfournement.

Lorsque le four verrier est en cours d'exploitation, le bloc d'angle ou le dispositif d'angle sont au moins en partie en contact avec du verre en fusion.

### Définitions

La « position de service » est la position dans laquelle le bloc d'angle est intégré dans une paroi latérale d'un bassin d'un four de verrier, de manière à connecter l'un à l'autre deux pans de ladite paroi latérale.

La hauteur de la ligne de flottaison varie lorsque le four verrier est en service. La « zone de flottaison » est délimitée par les hauteurs maximale et minimale de la ligne de flottaison lorsque le four verrier est en service.

Les adjectifs « droit » et « gauche », « chaud » et « froid » sont utilisés à des fins de clarté. Avant que le four ne soit en service, la face « chaude » est la face qui est destinée à être soumise à l'environnement à l'intérieur du four, c'est-à-dire aux températures les plus élevées après la mise en service.

« Inférieur » et « supérieur », « intérieur » et « extérieur », « horizontal » et « vertical » font référence à des orientations ou à des positions lorsque le bloc d'angle est dans sa position de service, dans un four verrier.

Par « horizontal » et « vertical », on entend une orientation formant avec un plan parfaitement horizontal et vertical, respectivement, un angle inférieur à 5°, voire inférieur à 2°, voire inférieur à 1°.

La direction de la longueur d'un bloc d'angle est la direction qui s'étend verticalement lorsque le bloc d'angle est en position de service. Cette direction est représentée par la flèche V sur les figures.

Un plan transversal est un plan perpendiculaire à la direction de la longueur du bloc d'angle.

Le plan transversal médian est le plan transversal à mi-longueur du bloc d'angle.

Dans un plan de coupe transversal, la largeur d'un bloc d'angle est mesurée le long de la ligne qui s'étend à mi-distance des faces chaude et froide. Sur les figures, cette ligne, dite « ligne de largeur », est représentée par la ligne X.

Dans un plan de coupe transversal, l'épaisseur est mesurée perpendiculairement à la ligne X de la largeur.

Un plan longitudinal est un plan qui inclut la direction de la longueur et qui, dans un plan transversal, est perpendiculaire à la ligne de largeur X du bloc d'angle. Le plan longitudinal médian est le plan longitudinal à mi-largeur, la largeur étant définie dans le plan de coupe transversal médian.

Un plan « de coupe » est un plan coupant un bloc et qui offre une vue du bloc ainsi coupé.

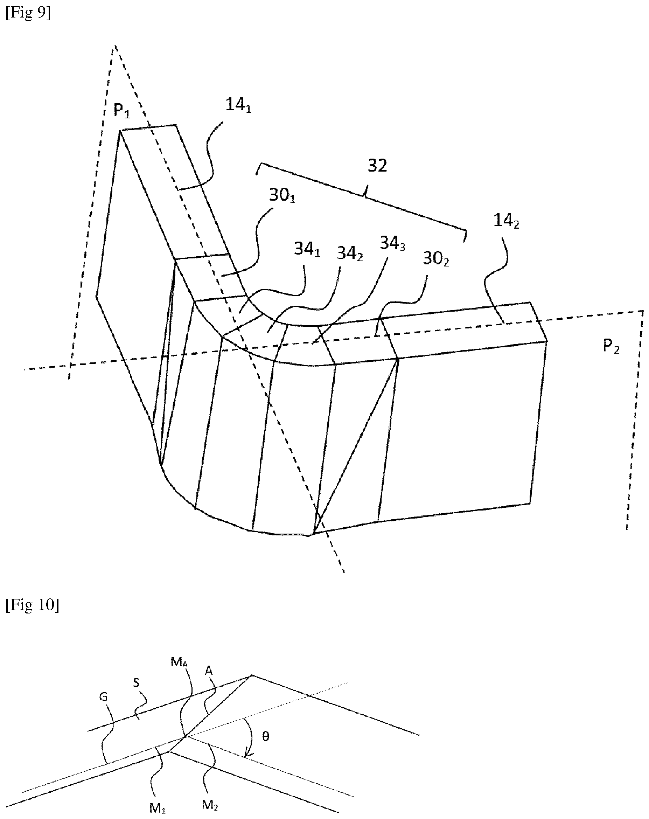

Les « arêtes » d'une surface sont constituées des points de cette surface auxquels une ligne de plus grande pente présente une évolution de pente, aussi appelée « rupture de pente », supérieure à 25°. Par extension, on dit également que la surface présente une rupture de pente supérieure à 25°. Par exemple, la figure 10 représente une surface S sur laquelle la ligne de plus grande pente G présente une rupture de pente de θ en tout point M_{A} de la ligne A. Si l'angle θ est supérieur à 25° pour tous les points de la ligne A, la ligne A est une arête. En pratique, on peut mesurer l'évolution de pente entre deux points M₁ et M₂ de la ligne de plus grande pente séparés d'une distance de 3 mm, la distance de 3 mm étant mesurée en suivant ladite ligne.

Par « usinage », on entend une opération par laquelle la surface d'une pièce réfractaire est usinée afin d'obtenir une géométrie de surface précise. Classiquement, et dans un mode de réalisation particulier de l'invention, l'usinage conduit à retirer au moins la peau.

Dans un souci de clarté, on utilise les formules chimiques des oxydes pour désigner les teneurs de ces oxydes dans une composition. Par exemple, « ZrO₂ », « SiO₂ » ou « Al₂O₃ » désignent les teneurs de ces oxydes et « zircone », « silice » et « alumine » sont utilisés pour désigner des phases de ces oxydes constituées de ZrO₂, SiO₂ et Al₂O₃, respectivement.

Sauf mention contraire, toutes les teneurs en oxydes dans un bloc d'angle selon l'invention sont des pourcentages massiques sur la base des oxydes. Une teneur massique d'un oxyde d'un élément métallique se rapporte à la teneur totale de cet élément exprimée sous la forme de l'oxyde le plus stable, selon la convention habituelle de l'industrie.

Dans un produit fondu, les oxydes représentent classiquement plus de 95%, plus de 97%, plus de 99%, de préférence sensiblement 100% de la masse.

HfO₂ n'est pas chimiquement dissociable de ZrO₂. Cependant, selon la présente invention, HfO₂ n'est pas ajouté volontairement. HfO₂ ne désigne donc que les traces d'oxyde d'hafnium, cet oxyde étant toujours naturellement présent dans les sources de zircone à des teneurs massiques généralement inférieures à 5%, généralement inférieures à 2%. Dans un bloc selon l'invention, la teneur massique en HfO₂ est de préférence inférieure à 5%, de préférence inférieure à 3%, de préférence inférieure à 2%. Par souci de clarté, on peut désigner indifféremment la teneur totale en oxyde de zirconium et en traces d'oxyde d'hafnium par « ZrO₂ » ou par « ZrO₂ + HfO₂ ». HfO₂ n'est donc pas compris dans les " espèces oxydes autres que ZrO₂, SiO₂, Al₂O₃, Na₂O, B₂O₃ et Y₂O₃".

« Comporter », « définir », « présenter » ou « comprendre » doivent être interprétés de manière large, non limitative.

Sauf indication contraire, la définition d'une caractéristique s'appliquant au tronçon principal n'exclut pas cette caractéristique pour le reste du bloc d'angle.

### Brève description des figures

D'autres caractéristiques et avantages de l'invention apparaîtront encore à la lecture de la description détaillée qui va suivre, non limitative, et à l'examen du dessin annexé dans lequel :
- [Fig 1] la figure 1 représente schématiquement, vu de dessus, un bassin de fusion de verre ;
- [Fig 2] la figure 2 représente schématiquement, en perspective, un premier mode de réalisation d'un bloc d'angle selon l'invention ;
- [Fig 3] la figure 3 représente schématiquement, en perspective, un deuxième mode de réalisation d'un bloc d'angle selon l'invention ;
- [Fig 4] la figure 4 représente schématiquement, en perspective, un troisième mode de réalisation d'un bloc d'angle selon l'invention ;
- [Fig 5] la figure 5 représente schématiquement, en perspective, un quatrième mode de réalisation d'un bloc d'angle selon l'invention ;
- [Fig 6] la figure 6 représente schématiquement, en perspective, un cinquième mode de réalisation d'un bloc d'angle selon l'invention ;
- [Fig 7] la figure 7 représente schématiquement, en perspective, un sixième mode de réalisation d'un bloc d'angle selon l'invention ;
- [Fig 8] la figure 8 représente schématiquement, en perspective, un septième mode de réalisation d'un bloc d'angle selon l'invention ;
- [Fig 9] la figure 9 représente schématiquement, en perspective, un dispositif d'angle selon l'invention comportant un bloc d'angle selon l'invention et des blocs d'adaptation, en position de service ;
- [Fig 10] la figure 10 illustre la définition d'une arête.

Dans les différentes figures, des références identiques ou analogues sont utilisées pour désigner des pièces ou des parties de pièce identiques ou analogues.

### Description détaillée

### Forme

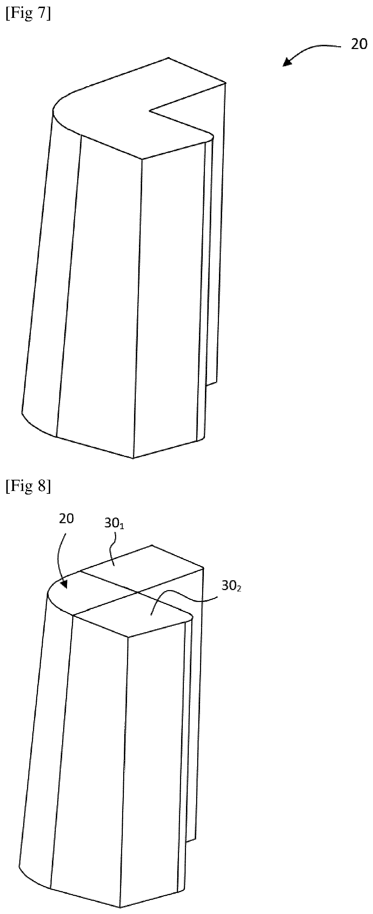

Par définition, un bloc d'angle 20 ou un dispositif d'angle 32 relie entre eux deux pans 14₁ et 14₂ de la paroi latérale du bassin 14, partiellement représentés sur la figure 8. Vus de dessus, les deux pans rejoignent le bloc d'angle ou le dispositif d'angle selon des plans de pan P₁ et P₂, respectivement. Les plans de pan P₁ et P₂ forment entre eux un angle supérieur à 45°, de préférence supérieur à 70°, de préférence supérieur à 80°, et/ou inférieur à 135°, de préférence inférieur à 110°, de préférence inférieur à 120°, classiquement d'environ 90°.

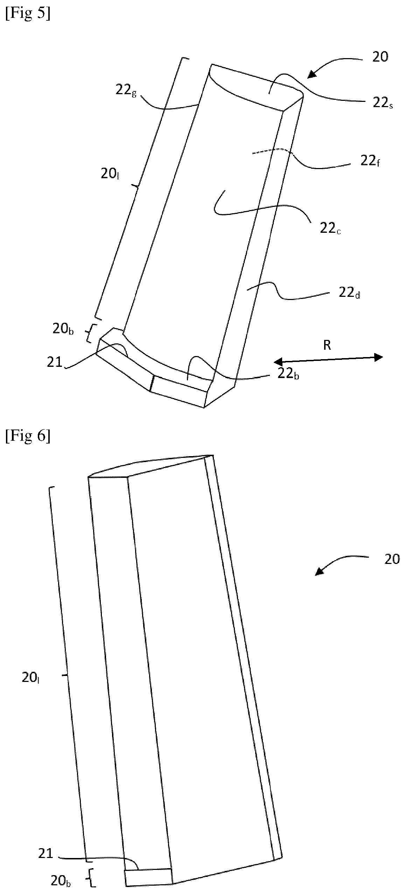

Comme représenté sur les figures 5 et 6, un bloc d'angle 20 comporte une partie latérale 20ₗ, destinée à être intégrée dans la paroi latérale 14 du bassin, et une partie de base 20_{b} destinée à prendre appui sur le sol et être intégrée dans la sole du bassin. La partie de base peut comporter des arêtes 21, en particulier lorsqu'elle fait saillie au-delà de la face chaude, sous la forme d'une semelle, comme représenté sur la figure 5.

La partie de base peut également ne pas se distinguer de la partie latérale, comme sur les figures 2 à 4.

La surface extérieure d'un bloc d'angle 20 comporte :
- des surfaces supérieure 22s et inférieure 22i, classiquement horizontales, délimitant la longueur L₂₀ du bloc d'angle,
- des surfaces droite et gauche, 22d et 22g, classiquement verticales, qui, dans la position de service, sont en contact avec des surfaces correspondantes de blocs adjacents,
- une surface latérale intérieure, ou « surface exposée », aussi appelée « face chaude » 22c, qui appartient à la surface intérieure de la paroi latérale 14 du bassin et qui, dans la position de service, est en contact avec l'environnement à l'intérieur du bassin,
- optionnellement, d'une surface intérieure de base 22_{b} qui, dans la position de service, est également en contact avec l'environnement à l'intérieur du bassin, mais qui appartient à la sole (voir par exemple la figure 5),
- une surface extérieure, aussi appelée « face froide » 22f, opposée à la face chaude 22c, qui, dans la position de service, est en contact avec l'environnement à l'extérieur du bassin.

De préférence, la surface supérieure 22s, classiquement plane, délimite le rebord supérieur de la paroi latérale du bassin.

De préférence, la surface inférieure 22i, classiquement plane, prend appui sur le sol.

De préférence, les surfaces droite et gauche, 22d et 22g sont planes. Classiquement, elles s'étendent dans des plans formant entre eux un angle supérieur à 45°, de préférence supérieur à 70°, de préférence supérieur à 80°, et/ou inférieur à 135°, de préférence inférieur à 110°, de préférence inférieur à 120°, classiquement d'environ 90°.

Les surfaces droite et gauche, 22d et 22g, sont classiquement perpendiculaires aux plans de pan P₁ et P₂, respectivement.

Dans un bloc d'angle, chacune des surfaces droite et gauche 22d et 22g est usinée. Une surface usinée ne présente donc pas une microstructure de peau.

De préférence, seules les surfaces qui, dans la position de service, sont en contact avec des surfaces correspondantes de blocs adjacents, sont usinées. De préférence, toutes les surfaces qui, dans la position de service, sont en contact avec des surfaces correspondantes de blocs adjacents, sont usinées.

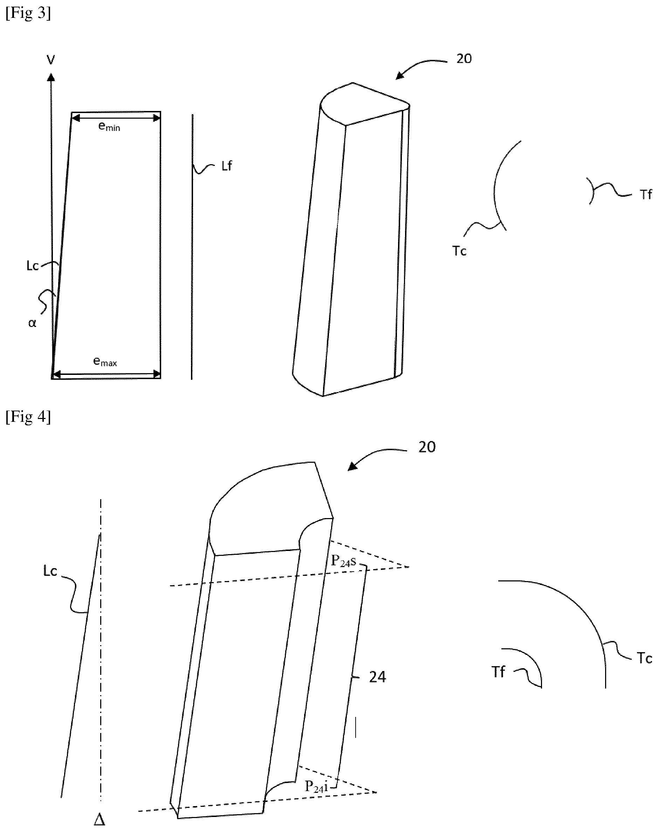

L'invention s'intéresse à la partie latérale 20ₗ qui, typiquement, s'étend à partir de la surface supérieure du bloc d'angle jusqu'à la partie de base 20_{b}, typiquement sur plus de 90% de la longueur du bloc d'angle. C'est pourquoi les caractéristiques décrites ci-dessous font référence à un tronçon principal 24 du bloc d'angle qui s'étend entre deux plans transversaux limites supérieur et inférieur, référencés P₂₄s et P₂₄i, respectivement, représentés sur la figure 4 par exemple.

De préférence, le tronçon principal 24 s'étend, entre les deux plans transversaux limites supérieur et inférieur P₂₄s et P₂₄i, sur plus de 80%, de préférence plus de 90%, de préférence plus de 95%, de préférence 100% de la longueur du bloc. Notamment dans les modes de réalisation représentés sur les figures 2 à 4, les deux plans transversaux limites supérieur et inférieur peuvent être les surfaces supérieure 22s et inférieure 22i, respectivement.

De préférence, le tronçon principal s'étend à partir de la surface supérieure. De préférence, le tronçon principal s'étend, selon la direction de la longueur, jusqu'à la partie de base du bloc d'angle.

De préférence, le tronçon principal s'étend à partir de la surface supérieure jusqu'à moins de 20 cm, de préférence moins de 10 cm, de préférence moins de 5 cm de la surface inférieure.

Selon l'invention, la face chaude ne présente pas d'arête dans le tronçon principal.

La face chaude est orientée vers l'intérieur du bassin. Elle est destinée à être mise au moins partiellement en contact avec du verre en fusion.

De préférence, la face chaude ne présente pas d'arête douce dans le tronçon principal, une arête étant douce lorsqu'elle délimite une rupture de pente inférieure à 15°, de préférence inférieure à 10°, de préférence inférieure à 5°, de préférence inférieure à 1°.

Dans le plan de coupe longitudinal médian Pl₅₀, le bloc d'angle présente une longueur L₂₀ de préférence supérieure à 0,5 m, de préférence supérieure à 0,8 m, de préférence supérieure à 1,0 m, de préférence supérieure à 1,2 m, et/ou inférieure à 2,0 m, de préférence inférieure à 1,7 m (la coupe dans ce plan est représentée sur la partie gauche des figures 2 et 3).

Le bloc d'angle 20 présente une épaisseur e₂₀, mesurée dans le plan de coupe longitudinal médian Pl₅₀ et dans le plan de coupe transversal médian Pt₅₀, de préférence supérieure à 200 mm, de préférence supérieure à 250 mm et/ou inférieure à 500 mm, de préférence inférieure à 450 mm.

De préférence, l'épaisseur eₘ du bloc d'angle, mesurée à l'intersection entre le plan de coupe transversal médian Pt₅₀ et le plan de coupe longitudinal passant par un point M de la ligne de largeur X du bloc d'angle, varie de moins de 20%, de préférence de moins de 10%, de préférence de moins de 5%, de préférence de moins de 1% par rapport à e₂₀ lorsque le point M parcourt la ligne de largeur X. Autrement dit, leₘ -e₂₀| / e₂₀ < 20%, de préférence |eₘ - e₂₀| / e₂₀ < 10%, de préférence |eₘ - e₂₀| / e₂₀ < 5%, de préférence |eₘ - e₂₀| / e₂₀ < 1%, quelle que soit l'épaisseur eₘ mesurée le long de la ligne de largeur X.

Dans le plan de coupe longitudinal médian Pl₅₀, le bloc d'angle peut présenter une épaisseur constante quelle que soit la position considérée selon la direction de la longueur du bloc d'angle, c'est-à-dire quel que soit le plan de coupe transversal considéré, au moins dans le tronçon principal, comme représenté par exemple sur la figure 2. La fabrication du bloc d'angle en est simplifiée.

Dans le plan de coupe longitudinal médian Pl₅₀, le bloc d'angle 20 peut présenter une épaisseur variable selon la position considérée selon la direction de la longueur du bloc d'angle.

De préférence, dans le plan de coupe longitudinal médian Pl₅₀, le bloc d'angle présente, au moins dans le tronçon principal, une épaisseur croissante, de préférence régulièrement croissante, à mesure que l'on descend suivant la direction de la longueur du bloc d'angle, comme représenté par exemple sur la figure 3.

De préférence, (eₘₐₓ - eₘᵢₙ)/eₘᵢₙ > 10%, et/ou, de préférence, (eₘₐₓ - eₘᵢₙ)/eₘᵢₙ < 30%, voire (eₘₐₓ - eₘᵢₙ)/eₘᵢₙ < 20%, eₘₐₓ et eₘᵢₙ désignant respectivement l'épaisseur maximale et l'épaisseur minimale dans le plan de coupe longitudinal médian Pl₅₀ (voir figure 2). La durée de vie du bloc d'angle en est sensiblement améliorée.

Dans un mode de réalisation préféré, le profil Lc de la face chaude dans le plan de coupe longitudinal médian Pl₅₀ est sensiblement rectiligne. De préférence, il forme, avec la direction verticale V, un angle α inférieur à 30°, de préférence inférieur à 20°, de préférence inférieur à 10°, voire inférieur à 5°, et/ou de préférence supérieur à 2°, de préférence supérieur à 3° (comme représenté, par exemple, sur la figure 3).

Dans un mode de réalisation, le profil Lc de la face chaude dans le plan de coupe longitudinal médian Pl₅₀, par exemple concave ou rectiligne, est conformé pour rentrer vers l'intérieur du bassin à mesure que l'on se rapproche de la surface inférieure 22i.

Comme représenté par exemple sur la figure 4, un point du profil Lc de la face chaude, dans le plan de coupe longitudinal médian Pl₅₀, peut être d'autant plus écarté d'une droite verticale Δ passant par l'extrémité supérieure dudit profil Lc que ledit point est proche de la surface inférieure 22i.

Dans un mode de réalisation, le profil Lf de la face froide dans le plan de coupe longitudinal médian est sensiblement rectiligne. De préférence, il forme, avec la direction verticale V, un angle inférieur à 10°, de préférence inférieur à 5°, de préférence inférieur à 2°, de préférence sensiblement nul, comme représenté, par exemple, sur la figure 3.

Dans le plan de coupe transversal médian Pt₅₀, la face chaude présente un profil Tc, reporté dans la partie droite des figures 2 à 4 pour plus de clarté.

Le profil de la face chaude peut être le même quel que soit le plan de coupe transversal choisi dans le tronçon principal, comme par exemple sur les figures 2 et 4. De préférence, il résulte d'une déformation homothétique du profil Tc (défini dans le plan de coupe transversal médian Pt₅₀) comme par exemple sur la figure 3 ou sur la figure 5. De préférence, le rapport d'homothétie augmente, de préférence de manière régulière, depuis le plan transversal limite supérieur jusqu'au plan transversal limite inférieur. Autrement dit, le profil s'allonge lorsqu'on descend le long du bloc d'angle, en conservant sa forme générale, comme par exemple sur les figures 3 et 5.

De préférence, le profil Tc est strictement convexe sur plus de 80%, de préférence plus de 90%, de préférence 100% de sa longueur. Dans un mode de réalisation, la face chaude ne présente pas de zone plane, comme sur les figures 1 à 3.

De préférence, le profil Tc ne comporte pas de portion strictement concave.

De préférence, le profil Tc ne présente pas de point singulier, c'est-à-dire pas de rupture de pente.

De préférence, le profil Tc est sensiblement symétrique par rapport au plan de coupe longitudinal médian, comme dans les modes de réalisation des figures 1 à 4.

Dans un mode de réalisation, le profil Tc présente la forme d'un arc de cercle (figures 2 et 3). L'arc de cercle peut être prolongé par des segments de droite (figure 4).

Dans le plan de coupe transversal médian Pt₅₀, la face froide présente un profil Tf, reporté dans la partie droite des figures 2 à 4 pour plus de clarté.

De préférence, le profil de la face froide est le même quel que soit le plan de coupe transversal choisi dans le tronçon principal.

Le profil Tf peut être strictement convexe (figures 2 et 3). De préférence, le profil Tf est cependant plat ou, strictement concave (figure 4), ce qui améliore la résistance mécanique.

De préférence, le profil Tf ne présente pas de point singulier, c'est-à-dire pas de rupture de pente.

De préférence encore, le profil Tf est sensiblement symétrique par rapport au plan longitudinal médian, comme dans les modes de réalisation des figures 2 à 4.

Dans un mode de réalisation, le profil Tf présente la forme d'un arc de cercle (figures 2 et 3). L'arc de cercle peut être prolongé par des segments de droite (figure 4).

Dans un mode de réalisation, dans le plan de coupe transversal médian, la distance entre les profils des faces chaude et froide est constante, quel que soit le plan de coupe longitudinal considéré.

Les caractéristiques décrites ci-dessus relatives à la forme du bloc d'angle et définies en référence au plan de coupe longitudinal médian sont de préférence applicables dans tout plan de coupe longitudinal entre deux plans longitudinaux limites définis par rapport à la ligne de largeur X (dans le plan de coupe transversal médian), la distance entre les plans longitudinaux limites étant de préférence supérieure à 60%, de préférence supérieure à 70%, de préférence supérieure à 80%, de préférence supérieure à 90% de la largeur du bloc d'angle (distance entre les faces droite et gauche, en suivant la ligne de largeur X dans le plan de coupe transversal médian).

Les caractéristiques décrites ci-dessus relatives à la forme du bloc d'angle dans le plan de coupe longitudinal médian sont de préférence applicables quel que soit le plan de coupe longitudinal considéré.

Les caractéristiques décrites ci-dessus et définies en référence au plan de coupe transversal médian sont de préférence applicables quel que soit le plan de coupe transversal considéré dans le tronçon principal.

Les surfaces droite et gauche sont classiquement de même forme que les surfaces des blocs latéraux avec lesquelles elles sont en contact. Ainsi, intérieurement, le bassin ne présente pas d'aspérité résultant d'un décrochement entre les blocs. Classiquement, les surfaces des blocs latéraux adjacents sont sensiblement de contour rectangulaire. Notamment lorsque le profil Lc provoque un élargissement du bloc d'angle dans la partie inférieure (figure 4 par exemple), il est donc nécessaire de rejoindre un contour rectangulaire dans les plans longitudinaux dans lesquels d'étendent les surfaces droite et gauche, comme représenté sur la figure 7 par exemple.

Le bloc d'angle 20 peut être constitué en un ou plusieurs morceaux. Il peut notamment un assemblage de plusieurs blocs élémentaires 34₁, 34₂ et 34₃, les faces aux extrémités droite et gauche de l'assemblage étant orientées perpendiculairement aux plans P₁ et P₂, respectivement.

Dans un mode de réalisation, des blocs d'adaptation 30₁ et 30₂ sont ajoutés au bloc d'angle selon l'invention, de manière à constituer un dispositif d'angle 32 selon l'invention, comme représenté sur la figure 8. Les blocs d'adaptation peuvent en particulier être configurés pour que la surface droite et la surface gauche du dispositif d'angle soient identiques à celles des blocs latéraux 14₁ et 14₂ adjacents, respectivement.

Le dispositif d'angle 32 peut donc comporter un bloc d'angle monobloc ou, comme représenté sur la figure 8, un assemblage de blocs élémentaires, et un ou plusieurs blocs d'adaptation de manière à adapter la forme des surfaces aux extrémités droite et gauche du dispositif d'angle aux faces des blocs adjacents en regard.

Dans le mode de réalisation de la figure 2, le bloc d'angle présente la forme générale d'un quart de tronc de cylindre de base circulaire et d'axe vertical, un quart de tronc d'un tel cylindre étant un morceau du tronc de cylindre après qu'il a été est coupé par deux plans perpendiculaires l'un à l'autre et passant par son axe.

Dans le mode de réalisation de la figure 3, le bloc d'angle présente la forme générale d'un quart de tronc de cône d'axe vertical, un quart de tronc de cône étant un morceau du tronc de cône après qu'il a été est coupé par deux plans perpendiculaires l'un à l'autre et passant par son axe.

Dans le mode de réalisation de la figure 4, le bloc d'angle présente la forme générale d'un quart de tronc de cylindre de base annulaire et d'axe vertical, un quart de tronc d'un tel cylindre étant un morceau du tronc de cylindre après qu'il a été est coupé par deux plans perpendiculaires l'un à l'autre et passant par son axe.

Selon un mode de réalisation, le bloc d'angle est pourvu d'un dispositif d'ancrage dans l'enveloppe métallique du four de verrerie. Ce dispositif d'ancrage est par exemple constitué d'une vis, d'un crochet, d'une plaque métallique, ou d'une encoche.

Bien entendu, les dimensions et les formes décrites ci-dessus ne sont pas limitatives.

### Composition

De préférence, le bloc d'angle selon l'invention comporte, de préférence est constitué en un matériau électrofondu constitué, pour plus de 80% de sa masse, d'alumine, de zircone, de silice et éventuellement d'un stabilisant de la zircone, en particulier d'oxyde d'yttrium. Le matériau peut être de type AZS ou bien à très haute teneur en zircone (comportant typiquement plus de 80% de ZrO₂ en pourcentage massique).

Dans un mode de réalisation, le bloc d'angle selon l'invention comporte plus de 0,5%, plus de 1,5%, plus de 3,0%, plus de 4,0%, plus de 5,0%, voire plus de 6,0%, et/ou moins de 10,0%, moins de 9,0%, voire moins de 8,0% de stabilisant de la zircone, en particulier CaO et/ou Y₂O₃ et/ou MgO et/ou CeO₂, de préférence Y₂O₃ et/ou CaO, de préférence Y₂O₃.

De préférence, le bloc d'angle selon l'invention présente une composition chimique, en pourcentages massiques sur la base des oxydes, telle que, pour un total de 100%,
- Al₂O₃ + ZrO₂ + SiO₂ : plus de 80,0%, de préférence plus de 84,0%, de préférence plus de 86,0%, et/ou moins de 97,0%, voire moins de 95,0%, voire moins de 94,0%, et/ou
- Y₂O₃: plus de 0,5%, plus de 1,5%, plus de 2,0% et/ou moins de 5,0%, moins de 4,0%, voire moins de 3,0%, et/ou
- Na₂O : plus de 0,1%, voire plus de 0,2%, et/ou moins de 0,6%, de préférence moins de 0,5%, voire moins de 0,4%, et/ou
- B₂O₃ : plus de 0,1%, voire plus de 0,2%, et/ou moins de 0,6%, de préférence moins de 0,5%, voire moins de 0,4%, et/ou
- espèces oxydes autres que Al₂O₃, ZrO₂, SiO₂, Y₂O₃, Na₂O et B₂O₃ : moins de 10,0%, de préférence moins de 9,0%, de préférence encore moins de 8,0%, moins de 5,0%, voire moins de 3,0%, ou moins de 2,0%, ou moins de 1,0%, ou moins de 0,5%.

Selon un mode de réalisation, le bloc d'angle selon l'invention présente une composition chimique telle que :
- ZrO₂ : plus de 12,0%, de préférence plus de 20,0%, de préférence plus de 25,0% et/ou moins de 80,0%, voire moins de 75,0% et/ou
- SiO₂ : plus de 6,0%, de préférence plus de 10,0% et/ou moins de 24,0%, voire moins de 20,0%, et/ou
- Al₂O₃ : plus de 18,0%, de préférence plus de 25,0% et/ou moins de 60,0%, de préférence moins de 50,0%.

Selon un mode de réalisation, le bloc d'angle selon l'invention présente une composition chimique telle que :
- ZrO₂ : plus de 12,0%, de préférence plus de 15,0%, de préférence plus de 18,0%, voire plus de 22,0%, et/ou moins de 45,0%, voire moins de 40,0%, voire moins de 35,0%, voire moins de 30,0%, voire moins de 25,0%, et/ou
- SiO₂ : plus de 8,0%, de préférence plus de 10,0%, de préférence plus de 12,0%, et/ou moins de 24,0%, voire moins de 20,0%, moins de 17,0%, voire moins de 14,0%, et/ou
- Al₂O₃ : plus de 35,0%, de préférence plus de 38,0%, voire plus de 40,0%, et/ou moins de 60,0%, de préférence moins de 55,0%, voire moins de 50,0%, moins de 46,0%, voire moins de 44,0%.

Selon un mode de réalisation, le bloc d'angle selon l'invention présente une composition chimique telle que :
- ZrO₂ : plus de 80,0%, de préférence plus de 83,0%, de préférence plus de 86,0%, et/ou moins de 97,0%, voire moins de 95,0%, voire moins de 94,0%, et/ou
- SiO₂ : plus de 0,5%, de préférence plus de 1,5%, de préférence plus de 2,5%, de préférence plus de 4,0%, voire plus de 6,0%, plus de 8,0%, plus de 8,5%, et/ou moins de 15,0%, voire moins de 12,0%, moins de 10,0%, voire moins de 8,0%, et/ou
- Al₂O₃ : plus de 0,2%, de préférence plus de 1,0%, et/ou moins de 3,0%, de préférence moins de 2,0%.

### Exemples

Des essais de modélisation ont été menés avec un logiciel de calcul par éléments finis (Ansys 17.0).

Avec ce logiciel, on a déterminé les champs de températures et de contraintes de blocs réfractaires en AZS, présentant une longueur de 1300 millimètres et une composition chimique avec 40 % de ZrO₂ (ER 1711 de Saint-Gobain SEFPRO), lorsque la face chaude du bloc est à une température de 1500°C, avec évacuation de la chaleur par soufflage d'air à température ambiante (20°C) et avec un coefficient de transfert thermique de 125 W/(m².K). Trois géométries de bloc ont été comparées :
- un pavé droit (bloc parallélépipédique rectangle), de base carrée de 450 millimètres de côté (« référence » dans le tableau 1 ci-dessous) ;
- un bloc arrondi, représentant un quart de cône, du type de celui représenté sur la figure 3, le rayon du profil de la face chaude étant de 450 millimètres au niveau de la surface supérieure et de 550 millimètres au niveau de la surface inférieure (exemple 1) ;
- le bloc de l'exemple 1 comportant, sur la face froide, une plaque en un matériau isolant de 10 millimètres d'épaisseur (conductivité thermique de 0,5 W/(m.K) (exemple 2).

L'état de contrainte de chaque point du bloc peut se représenter par un tenseur, le tenseur des contraintes. Les contraintes principales sont les contraintes exprimées dans une base telle que le tenseur des contraintes est une matrice diagonale. On appelle « première contrainte principale » le coefficient de cette matrice qui correspond à la contrainte en traction (positive) la plus élevée. La criticité des sollicitations a été évaluée par le maximum Rmax du rapport R de la première contrainte principale sur la contrainte à rupture (MOR), en considérant l'ensemble des rapports R le long de l'arête la plus sollicitée. Le MOR est mesuré sous air, à la température considérée, sur une éprouvette de dimensions 80*20*20 mm³ dans un montage en flexion 3 points réalisé avec une distance de 70 mm entre les deux appuis inférieurs et la vitesse de descente du poinçon est égale à 0,5 mm/min. Plus Rmax est élevé, plus la rupture est probable. Les résultats sont donnés dans le tableau 1.

**[tableau 1]**

| | Rmax | Diminution par rapport à la référence |
|---|---|---|
| Référence | 3,0 | |
| Exemple 1 | 2,0 | 33 % |
| Exemple 2 | 1,3 | 57 % |

Les essais montrent donc qu'un bloc d'angle selon l'invention permet, de manière remarquable, de limiter les contraintes.

L'invention est particulièrement bien adaptée aux blocs d'entrée de corset.

Il va de soi que les modes de réalisation décrits ne sont que des exemples et l'on pourrait les modifier.

## Revendications

1. Bloc d'angle pour bassin de four verrier, ledit bloc d'angle présentant une surface extérieure (20) comportant :
- des surfaces supérieure (22s) et inférieure (22i), horizontales, délimitant la longueur (L₂₀) du bloc d'angle,
- des surfaces droite (22d) et gauche (22g), verticales, destinées à être en contact, dans la position de service, avec des surfaces correspondantes de blocs adjacents, lesdites surfaces droite (22d) et gauche (22g) étant usinées et ne présentant pas une microstructure de peau,
- une surface latérale intérieure, appelée face chaude (22c), qui appartient à une surface intérieure d'une paroi latérale (14) du bassin et qui est destinée à être en contact, dans la position de service, avec l'environnement à l'intérieur dudit bassin,
- une face froide (22f), opposée à la face chaude (22c), qui dans la position de service, est en contact avec l'environnement à l'extérieur du bassin,
le bloc d'angle étant **caractérisé en ce que**, dans un tronçon principal (24) du bloc d'angle s'étendant, sur plus de 80% de la longueur du bloc d'angle, entre deux plans transversaux limites supérieur (P₂₄s) et inférieur (P₂₄i), la face chaude (22c) est dépourvue d'arête,
une arête étant une ligne suivant laquelle la face chaude présente une rupture de pente supérieure à 25°, la face chaude (22c) présentant un profil (Tc) convexe dans un plan de coupe transversal quelconque dans le tronçon principal (24).

2. Bloc d'angle selon la revendication précédente, dans lequel le tronçon principal (24) s'étend depuis la surface supérieure (22s) jusqu'à une partie de base (20_{b}) destinée à être intégrée dans une sole du bassin dans la position de service.

3. Bloc d'angle selon l'une quelconque des revendications précédentes, dans lequel, dans le tronçon principal (24), la face chaude (22c) est dépourvue d'arête marquant une rupture de pente supérieure à 10°.

4. Bloc d'angle selon l'une quelconque des revendications précédentes, présentant, dans un plan de coupe longitudinal médian (Pl₅₀), dans le tronçon principal (24), une épaisseur décroissante depuis le plan transversal limite inférieur (P₂₄i) jusqu'au plan transversal limite supérieur (P₂₄s).

5. Bloc d'angle selon l'une quelconque des revendications précédentes, dans lequel, dans le tronçon principal (24), un point du profil (Lc) de la face chaude dans un plan de coupe longitudinal médian (Pl₅₀) est d'autant plus écarté d'une droite verticale (Δ) passant par l'extrémité supérieure dudit profil que ledit point est proche de la surface inférieure (22i).

6. Bloc d'angle selon l'une quelconque des revendications précédentes, dans lequel, dans le tronçon principal (24), le profil (Lc) de la face chaude dans un plan de coupe longitudinal médian (Pl₅₀) est rectiligne et forme, avec la direction verticale V, un angle α inférieur à 30° et supérieur à 2°.

7. Bloc d'angle selon la revendication immédiatement précédente, dans lequel l'angle α est inférieur à 20° et supérieur à 5°.

8. Bloc d'angle selon l'une quelconque des revendications précédentes, dans lequel la face chaude (22c) est strictement convexe dans le tronçon principal (24).

9. Bloc d'angle selon l'une quelconque des revendications précédentes, dans lequel, dans un plan de coupe transversal quelconque dans le tronçon principal (24), la face chaude (22c) présente un profil (Tc) convexe en forme d'arc de cercle, optionnellement prolongé, à une ou à chacune de ses extrémités, par un segment de droite.

10. Bloc d'angle selon l'une quelconque des revendications précédentes, dans lequel la face chaude présente, dans un plan de coupe transversal, un profil dont la forme générale est identique quel que soit le plan de coupe transversal considéré dans le tronçon principal.

11. Bloc d'angle selon l'une quelconque des revendications précédentes, dans lequel la face chaude présente, dans un plan de coupe transversal du tronçon principal, un profil qui est d'autant plus long que ledit plan de coupe transversal est proche du plan transversal limite inférieur.

12. Bloc d'angle selon l'une quelconque des revendications précédentes, présentant la forme générale d'un quart de tronc de cylindre de base circulaire, ou d'un quart de tronc de cône, ou d'un quart de tronc de cylindre de base annulaire.

13. Bloc d'angle selon l'une quelconque des revendications précédentes, dans lequel, dans le tronçon principal, la face froide (22f) est dépourvue d'arête.

14. Bloc d'angle selon l'une quelconque des revendications précédentes, dans lequel un premier matériau isolant thermiquement, présentant une conductivité thermique inférieure à 7,0 W.m⁻¹.K⁻¹, est disposé sur une partie de la face froide qui s'étend depuis la surface supérieure du bloc d'angle, jusqu'à plus de 300 mm de ladite surface supérieure.

15. Dispositif d'angle (32) comportant un bloc d'angle (20) selon l'une quelconque des revendications précédentes et un bloc d'adaptation (30₁, 30₂) présentant une première face en contact avec la surface gauche (22g) ou la surface droite (22d) du bloc d'angle, et une deuxième face, parallèle et opposée à la première face, et présentant une forme différente de ladite première face.

16. Four verrier comportant un bassin comportant une paroi latérale (14) comportant deux pans (14₁,14₂) et un bloc d'angle selon l'une quelconque des revendications 1 à 13 ou un dispositif d'angle selon la revendication immédiatement précédente, ledit bloc d'angle ou ledit dispositif d'angle reliant lesdits deux pans.

17. Four verrier selon la revendication immédiatement précédente, dans lequel dans lequel le bassin défini un corset (8), le bloc d'angle ou le dispositif d'angle étant disposé en entrée de corset.

## Patentansprüche

1. Eckstein für eine Wanne eines Glasschmelzofens, wobei der Eckstein eine äußere Fläche (20) aufweist, die umfasst:
- horizontale obere (22s) und untere (22i) Flächen, die die Länge (L₂₀) des Ecksteins begrenzen,
- vertikale rechte (22d) und linke (22g) Flächen, die dazu bestimmt sind, in der Betriebsposition mit entsprechenden Flächen benachbarter Steine in Kontakt zu sein, wobei die rechten (22d) und linken (22g) Flächen bearbeitet sind und keine Hautmikrostruktur aufweisen,
- eine innere seitliche Fläche, heiße Seite (22c) genannt, die zu einer inneren Fläche einer Seitenwand (14) der Wanne gehört und die dazu bestimmt ist, in der Betriebsposition mit der Umgebung innerhalb der Wanne in Kontakt zu sein,
- eine kalte Seite (22f), die zu der heißen Seite (22c) entgegengesetzt ist und die in der Betriebsposition mit der Umgebung außerhalb der Wanne in Kontakt ist,
wobei der Eckstein **dadurch gekennzeichnet ist, dass** in einem Hauptabschnitt (24) des Ecksteins, der sich über mehr als 80 % der Länge des Ecksteins zwischen zwei oberen (P₂₄s) und unteren (P₂₄i) Grenzquerebenen erstreckt, die heiße Seite (22c) frei von Kanten ist,
wobei eine Kante eine Linie ist, entlang der die heiße Seite einen Neigungswechsel von mehr als 25° aufweist, wobei die heiße Seite (22c) in einer beliebigen Querschnittsebene in dem Hauptabschnitt (24) ein konvexes Profil (Tc) aufweist.

2. Eckstein nach dem vorhergehenden Anspruch, wobei sich der Hauptabschnitt (24) von der oberen Fläche (22s) aus bis zu einem Basisteil (20_{b}) erstreckt, der dazu bestimmt ist, in der Betriebsposition in einen Boden der Wanne integriert zu sein.

3. Eckstein nach einem der vorhergehenden Ansprüche, wobei in dem Hauptabschnitt (24) die heiße Seite (22c) frei von Kanten ist, die einen Neigungswechsel von mehr als 10° markieren.

4. Eckstein nach einem der vorhergehenden Ansprüche, der in einer Längsmittelschnittebene (Pl₅₀) in dem Hauptabschnitt (24) eine Dicke aufweist, die von der unteren Grenzquerebene (P₂₄i) aus bis zu der oberen Grenzquerebene (P₂₄s) abnimmt.

5. Eckstein nach einem der vorhergehenden Ansprüche, wobei in dem Hauptabschnitt (24) ein Punkt des Profils (Lc) der heißen Seite in einer Längsmittelschnittebene (Pl₅₀) umso weiter von einer vertikalen Geraden (Δ), die durch das obere Ende des Profils verläuft, beabstandet ist, je näher dieser Punkt der unteren Fläche (22i) ist.

6. Eckstein nach einem der vorhergehenden Ansprüche, wobei in dem Hauptabschnitt (24) das Profil (Lc) der heißen Seite in einer Längsmittelschnittebene (Pl₅₀) geradlinig ist und mit der vertikalen Richtung V einen Winkel α von weniger als 30° und mehr als 2° bildet.

7. Eckstein nach dem unmittelbar vorhergehenden Anspruch, wobei der Winkel α kleiner als 20° und größer als 5° ist.

8. Eckstein nach einem der vorhergehenden Ansprüche, wobei die heiße Seite (22c) in dem Hauptabschnitt (24) streng konvex ist.

9. Eckstein nach einem der vorhergehenden Ansprüche, wobei in einer beliebigen Querschnittsebene in dem Hauptabschnitt (24) die heiße Seite (22c) ein kreisbogenförmiges konvexes Profil (Tc) aufweist, das an einem oder jedem ihrer Enden optional durch ein Geradensegment verlängert wird.

10. Eckstein nach einem der vorhergehenden Ansprüche, wobei die heiße Seite in einer Querschnittsebene ein Profil aufweist, dessen Grundform unabhängig von der betrachteten Querschnittsebene in dem Hauptabschnitt identisch ist.

11. Eckstein nach einem der vorhergehenden Ansprüche, wobei die heiße Seite in einer Querschnittsebene des Hauptabschnitts ein Profil aufweist, das umso länger ist, je näher die Querschnittsebene der unteren Grenzquerebene ist.

12. Eckstein nach einem der vorhergehenden Ansprüche, der die Grundform eines Zylinderstumpf-Viertels mit kreisförmiger Grundfläche oder eines Kegelstumpf-Viertels oder eines Zylinderstumpf-Viertels mit ringförmiger Grundfläche aufweist.

13. Eckstein nach einem der vorhergehenden Ansprüche, wobei in dem Hauptabschnitt die kalte Seite (22f) frei von Kanten ist.

14. Eckstein nach einem der vorhergehenden Ansprüche, wobei ein erstes thermisch isolierendes Material, das eine Wärmeleitfähigkeit von weniger als 7,0 W.m⁻¹.K⁻¹ aufweist, auf einem Teil der kalten Seite angeordnet ist, der sich von der oberen Fläche des Ecksteins aus bis zu mehr als 300 mm von der oberen Fläche erstreckt.

15. Eckvorrichtung (32), umfassend einen Eckstein (20) nach einem der vorhergehenden Ansprüche und einen Adapterstein (30₁, 30₂), der eine erste Seite aufweist, die mit der linken Fläche (22g) oder der rechten Fläche (22d) des Ecksteins in Kontakt ist, und eine zu der ersten Seite parallele und entgegengesetzte zweite Seite, die eine andere Form als die erste Seite aufweist.

16. Glasschmelzofen, der eine Wanne umfasst, die eine Seitenwand (14) umfasst, die zwei Wandstücke (14₁, 14₂) und einen Eckstein nach einem der Ansprüche 1 bis 13 oder eine Eckvorrichtung nach dem unmittelbar vorhergehenden Anspruch umfasst, wobei der Eckstein oder die Eckvorrichtung die beiden Wandstücke verbindet.

17. Glasschmelzofen nach dem unmittelbar vorhergehenden Anspruch, wobei die Wanne eine Taillierung (8) definiert, wobei der Eckstein oder die Eckvorrichtung am Eingang der Taillierung angeordnet ist.

## Claims

1. Corner block for a glass furnace tank, said corner block having an outer surface (20) comprising:
- upper (22s) and lower (22i) horizontal surfaces delimiting the length (L₂₀) of the corner block,
- right (22d) and left (22g) vertical surfaces intended to be in contact, in the operational position, with corresponding surfaces of adjacent blocks, said right (22d) and said left (22g) surfaces being machined and not having a skin microstructure,
- an inner side surface, called the hot face (22c), which belongs to an inner surface of a side wall (14) of the tank and which is intended to be in contact, in the operational position, with the environment inside said tank,
- a cold face (22f), opposite the hot face (22c) which, in the operational position, is in contact with the environment outside the tank,
the corner block being **characterized in that** in a main portion (24) of the corner block extending, over more than 80% of the length of the corner block, between two limiting upper (P₂₄s) and lower (P₂₄i) transverse planes, the hot face (22c) is edge-free,
an edge being a line along which the hot face has a break in slope greater than 25°, the hot face (22c) having a profile (Tc) that is convex in any transverse sectional plane in the main portion (24).

2. Corner block according to the preceding claim, wherein the main portion (24) extends from the upper surface (22s) to a base part (20_{b}) intended to be integrated in a floor of the tank in the operational position.

3. Corner block according to any one of the preceding claims, wherein, in the main portion (24), the hot face (22c) is devoid of an edge marking a break in slope greater than 10°.

4. Corner block according to any one of the preceding claims, having, in a median longitudinal sectional plane (Pl₅₀), in the main portion (24), a thickness decreasing from the limiting lower transverse plane (P₂₄i) to the limiting upper transverse plane (P₂₄s).

5. Corner block according to any one of the preceding claims, wherein, in the main portion (24), a point of the profile (Lc) of the hot face in a median longitudinal sectional plane (Pl₅₀) becomes increasingly distant from a vertical line (Δ) passing through the upper end of the said profile, the closer said point is moved towards the lower surface (22i).

6. Corner block according to any one of the preceding claims, wherein, in the main portion (24), the profile (Lc) of the hot face in a median longitudinal sectional plane (Pl₅₀) is rectilinear and forms, with the vertical direction V, an angle α of less than 30° and greater than 2°.

7. Corner block according to the immediately preceding claim, wherein the angle α is less than 20° and greater than 5°.

8. Corner block according to any one of the preceding claims, wherein the hot face (22c) is strictly convex in the main portion (24).

9. Corner block according to any one of the preceding claims, wherein, in any transverse sectional plane in the main portion (24), the hot face (22c) has a convex profile (Tc) in the form of a circular arc, optionally extended, at one or both of its ends, by a straight segment.

10. Corner block according to any one of the preceding claims, wherein the hot face has, in a transverse sectional plane, a profile of which the general shape is identical whatever the transverse sectional plane considered in the main portion.

11. Corner block according to any one of the preceding claims, wherein the hot face has, in a transverse sectional plane of the main portion, a profile which is longer, the closer said transverse sectional plane is moved towards the lower limiting transverse plane.

12. Corner block according to any one of the preceding claims, having the general shape of a quarter-body cylinder with a circular base, or a quarter-body cone, or a quarter-body cylinder with an annular base.

13. Corner block according to any one of the preceding claims, wherein in the main portion the cold face (22f) is edge-free.

14. Corner block according to any one of the preceding claims, wherein a first thermally insulating material having a thermal conductivity of less than 7.0 W.m⁻¹.K⁻¹ is disposed on a portion of the cold face that extends from the upper surface of the corner block to more than 300 mm from said upper surface.

15. Corner device (32) comprising a corner block (20) according to any one of the preceding claims and an adapter block (30₁, 30₂) having a first face in contact with the left surface (22g) or the right surface (22d) of the corner block, and a second face, parallel to and opposite the first face, and having a shape different from said first face.

16. Glass furnace comprising a tank comprising a side wall (14) comprising two segments (14₁, 14₂) and a corner block according to any one of Claims 1 to 13 or a corner device according to the immediately preceding claim, said corner block or said corner device connecting said two segments.

17. Glass furnace according to the immediately preceding claim, wherein the tank defines a corset (8), the corner block or corner device being disposed at the corset entrance.
